# FASCICULE DE BREVET EUROPEEN

(11) **EP 3 246 620 B1**
(45) Date de publication et mention de la délivrance du brevet: **05.01.2022**
(21) Numéro de dépôt: 17170507.2
(22) Date de dépôt: 10.05.2017
(51) Int. Cl.: F21S 41/24, F21S 41/27, F21S 41/151, F21S 41/148, F21S 41/365, F21Y 115/10

(54) **PROJECTEUR À LED À DIOPTRE CRÉANT COUPURE POUR VÉHICULES**
LED-SCHEINWERFER FÜR FAHRZEUGE MIT DIOPTER, DER EINE ABSCHATTUNG ERZEUGT
LED HEADLIGHT WITH DIOPTRE CREATING A CUT-OUT FOR VEHICLES

(30) Priorité: 18.05.2016 FR 1654403
(43) Date de publication de la demande: 22.11.2017
(73) Titulaire: Valeo Vision, 93012 Bobigny Cedex (FR)
(72) Inventeur: LAMINETTE, Maxime, 49000 ANGERS (FR); DOHA, Jean-François, 49000 ANGERS (FR); FLOCH, Lionel, 49000 ANGERS (FR)
(74) Mandataire: Valeo Visibility

(56) Documents cités:
- EP-A1- 2 993 392
- EP-A2- 2 818 792
- DE-A1-102013 013 995
- FR-A1- 2 966 224
- US-A1- 2004 156 209

## Description

La présente invention se rapporte à un projecteur lumineux pour véhicule automobile. L'invention concerne plus particulièrement un module optique d'éclairage apte à produire un faisceau lumineux à coupure, et configuré pour assurer une fonction de projecteurs à LED de virage (*Cornering Lamps*) et/ou d'éclairage directionnel fixe.

Pour le cas de phares à diodes électroluminescentes (LEDs), il est connu des projecteurs émettant un faisceau de forte intensité en direction d'une scène de route. Ces projecteurs peuvent assurer, notamment, des fonctions d'éclairage directionnel fixe dites de FBL (*Fixed Bending Light* en anglais) ou d'éclairage directionnel mobile dites de DBL (*Dynamic Bending Light* en anglais). La fonction FBL et/ou de virage permet par exemple d'éclairer progressivement le bas-côté de la route lorsque le véhicule effectue un virage. A cet effet, on prévoit une source lumineuse qui permet de générer progressivement un faisceau illuminant la route lors de la négociation d'un virage. Pour éviter cependant que la lumière émise ne crée un éblouissement d'un autre automobiliste, on prévoit généralement des moyens pour réaliser une coupure du faisceau à un certain niveau au-dessus de la route. Les rayons lumineux du faisceau d'éclairage sont ainsi émis au-dessous d'une ligne ou d'un plan, appelée coupure.

Il est connu en ce sens des projecteurs lumineux comportant un module optique émettant un faisceau lumineux à coupure. Un projecteur de ce type est connu par exemple d'après EP 1 715 245, qui décrit un module d'éclairage fournissant un faisceau lumineux à coupure avec une plieuse sans revêtement réfléchissant, c'est-à-dire fonctionnant par réflexion interne. EP 2 818 792 A2 divulgue un autre module d'éclairage connu de l'art antérieur.

Un projecteur configuré pour émettre un faisceau à coupure doit cependant émettre un flux suffisant de lumière dans la direction de déplacement du véhicule, ou suivant une direction légèrement oblique rapport à l'axe longitudinal du véhicule. Ceci pose un certain nombre de problèmes, puisque habituellement les projecteurs comprennent un ou plusieurs modules optiques émettant des faisceaux lumineux dont l'axe optique coïncide peu ou prou avec l'axe longitudinal du véhicule.

Ce type de module présente également différents d'autres inconvénients. Un problème fréquent rencontré dans ce contexte concerne les moyens de limiter la hauteur de sortie du faisceau lumineux émis par de tels projecteurs, tout en conservant un flux lumineux suffisant et un rendement optimal. De plus, ce type de modules ne permet généralement d'éclairer une scène de route que sur un faible angle d'ouverture. La juxtaposition de plusieurs de ces modules pour constituer un projecteur à large faisceau permet de résoudre ce problème, mais pose des problèmes d'encombrements en raison de l'épaisseur importante du dispositif. En effet, le volume important occupé par un tel projecteur désavantage la juxtaposition de plusieurs de ces modules pour former un faisceau lumineux à coupure. Notamment, il est connu que ces modules d'éclairage nécessitent des processus de fabrication complexes à l'aide de moules multi-couches. De plus, dans le cas où l'on souhaite accoler plusieurs modules, la face de sortie n'est pas continue est peut diminuer la qualité du faisceau. Finalement, la taille volumineuse de ces modules augmente considérablement le prix unitaire de tels projecteurs lumineux et rend leur coût de production prohibitif.

Pour pallier ces difficultés, l'invention vise à proposer un projecteur lumineux multi-sources à LED à dioptre pour véhicule, donnant un faisceau à coupure, et dans lequel plusieurs modules permettent de générer ledit faisceau lumineux à coupure. L'invention a pour but, surtout, de proposer un module d'éclairage pour projecteur de véhicule automobile apte à émettre un faisceau lumineux à coupure selon un axe optique prédéterminé, ledit module d'éclairage comprenant :
- une source lumineuse pour générer un faisceau,
- un élément optique pour recevoir le faisceau généré par la source lumineuse et configuré pour former à partir de ce faisceau ledit faisceau lumineux à coupure,
ledit élément optique comprenant :
- un collimateur configuré pour recevoir le faisceau généré par la source lumineuse et pour collimater ce faisceau en un faisceau collimaté,
- un coupleur optique configuré pour coupler le faisceau collimaté en un faisceau couplé dans un guide de lumière,
- un moyen de coupure disposé au sein dudit guide de lumière sur le chemin desdits rayons dans le guide de lumière et former un faisceau à coupure, et
- au moins une face de sortie dudit guide de lumière configurée pour projeter ledit faisceau à coupure hors de l'élément optique,
- l'élément optique étant formé en une seule pièce,caractérisé en ce que ledit coupleur optique comprend une pluralité de faces réfléchissantes, chacune desdites faces réfléchissantes présentant une section en forme parabolique.

Par « directions sensiblement parallèles », et plus précisément par « rayons sensiblement parallèles » d'un faisceau lumineux, on comprendra ici que les rayons sont dirigés sous la forme d'un faisceau à rayons parallèles à plus ou moins 5° près. Par ailleurs, pour la suite de la description, on entendra par face ou surface réfléchissante autant une face ou surface apte à réfléchir un rayon lumineux incident par réflexion totale qu'une face ou surface revêtue d'un revêtement réfléchissant pour réfléchir un rayon lumineux incident.

Selon différentes caractéristiques supplémentaires dudit module d'éclairage qui pourront être prises ensembles ou de façon séparée :
- le guide de lumière présente une épaisseur sensiblement constante ;
- le moyen de coupure comprend une arête d'une surface dudit guide de lumière, notamment d'une paroi inférieure du guide de lumière située entre ledit coupleur et ladite au moins une face de sortie ;
- le moyen de coupure comprend une surface dudit guide de lumière, ladite paroi s'étendant à partir de ladite arête et agencée pour renvoyer une partie des rayons dans le guide de lumière ;
- le moyen de coupure forme un décroché dans le guide de lumière, ledit décroché formant un angle avec une partie horizontale et avec une partie inclinée;
- le collimateur est configuré pour dévier les rayons du faisceau généré par la source de sorte à les rendre sensiblement parallèles entre eux ;
- le collimateur est un solide de révolution présentant un axe de révolution et comprend une ou plusieurs surfaces réfléchissantes ;
- le collimateur comprend une lentille, un réflecteur, un réfracteur, ou un moyen de collimation de type concave ou convexe ;
- le collimateur comprend une ou plusieurs faces internes agencées pour réfléchir et/ou réfracter des rayons du faisceau généré.
- le coupleur optique est configuré pour scinder le faisceau collimaté en plusieurs sous-faisceaux lumineux distincts, et notamment en trois sous-faisceaux lumineux distincts chacun émis à 90° l'un par rapport l'autre ;
- le coupleur optique comprend une première face réfléchissante agencée pour réfléchir les rayons d'un premier sous-faisceau lumineux du faisceau collimaté scindé selon une direction sensiblement parallèle à l'axe optique vers le moyen de coupure; le cas échéant, cette première face réfléchissante est une première face de couplage agencée pour réfléchir et focaliser les rayons du premier sous-faisceau sur le moyen de coupure
- le coupleur optique comprend au moins une deuxième face réfléchissante agencée pour réfléchir les rayons d'un deuxième sous-faisceau lumineux du faisceau collimaté scindé vers une ou plusieurs surfaces de réflexion du guide de lumière, et éventuellement une troisième face réfléchissante agencée pour réfléchir les rayons d'un troisième sous-faisceau lumineux du faisceau collimaté scindé vers une ou plusieurs autres surfaces de réflexion du guide de lumière;
- la source lumineuse comprend une pluralité de diodes électroluminescentes disposées sur un même plan, ledit plan étant disposé sous ledit collimateur et/ou sous ledit moyen de coupure par rapport audit axe optique ;
- le guide de lumière comprend une pluralité de faces, notamment planes, disposées à proximité dudit coupleur optique pour rediriger l'ensemble des rayons desdits sous-faisceaux dans le guide de lumière selon une direction sensiblement parallèle à la direction dudit axe optique vers le moyen de coupure ;
- le guide de lumière présente une face supérieure et une face inférieure reliées entre elles par une tranche, ladite face supérieure et ladite face inférieure s'étendant dans des plans sensiblement parallèles entre eux.
- le guide de lumière comprend au moins une face réfléchissante configurée pour recevoir une partie des rayons du faisceau couplé par le coupleur optique, notamment des deuxième et troisième sous-faisceaux, et pour réfléchir et focaliser ces rayons sur le moyen de coupure.
- la ou les faces du guide de lumière sont disposées à l'arrière du coupleur optique selon l'axe optique ;
- la distance séparant le rayon distal dudit faisceau à coupure et ledit axe optique est inférieure ou égale à 10mm.

L'invention vise en outre à proposer un projecteur lumineux comprenant plusieurs modules d'éclairage, lesdits modules présentant une ou plusieurs des caractéristiques ci-dessus, et caractérisé en ce que plusieurs desdits modules sont juxtaposés, de préférence cinq desdits modules, pour générer un faisceau, dit faisceau résultant, suivant la direction d'un axe optique de l'un desdits modules.

Selon différentes caractéristiques supplémentaires dudit projecteur lumineux qui pourront être prises ensemble ou de façon séparée :
- les faces de sortie de chacun desdits modules sont réunies en une seule surface lisse continue, notamment une glace commune auxdits plusieurs modules ;
- les modules sont configurés pour réaliser une fonction d'éclairage directionnel fixe et/ou de virage avec un flux lumineux supérieur ou égal à 200 lumens.

D'autres caractéristiques, détails et avantages de l'invention ressortiront à la lecture de la description faite en référence aux dessins annexés donnés à titre d'exemple et qui représentent, respectivement :
- la figure 1, une vue en coupe transversale d'un module d'éclairage selon un exemple de réalisation de l'invention ;
- la figure 2, une vue en coupe en perspective d'un collimateur et d'un coupleur selon un exemple de réalisation de l'invention ;
- la figure 3, un schéma illustrant le fonctionnement d'un coupleur selon un exemple de réalisation de l'invention ;
- la figure 4, un schéma illustrant le tracé des rayons lumineux transmis dans un module d'éclairage selon un exemple de réalisation de l'invention ;
- les figures 5a, 5b et 5c, respectivement, une vue en coupe d'un module d'éclairage selon plusieurs exemples de réalisation de l'invention ;
- la figure 6, une vue en coupe de devant d'un module d'éclairage selon un exemple de réalisation de l'invention ;
- la figure 7, un réseau de courbes isolux établies pour un flux lumineux donné, et obtenu avec un module d'éclairage dont la surface de sortie ne comporte pas de modulation d'épaisseur pour modifier l'inclinaison de coupure dudit faisceau ;
- La figure 8, un réseau de courbes isolux établies pour un flux lumineux donné, et obtenu avec un module d'éclairage dont la surface de sortie comporte une modulation d'épaisseur pour modifier l'inclinaison de coupure dudit faisceau ;
- les figures 9a et 9b, une vue en perspective et une vue en coupe du dessus, respectivement, d'un projecteur lumineux selon un premier exemple de mise en œuvre de l'invention ;
- les figures 10a et 10b, une vue en perspective et une vue en coupe du dessus, respectivement, d'un projecteur lumineux selon un deuxième exemple de mise en œuvre de l'invention.

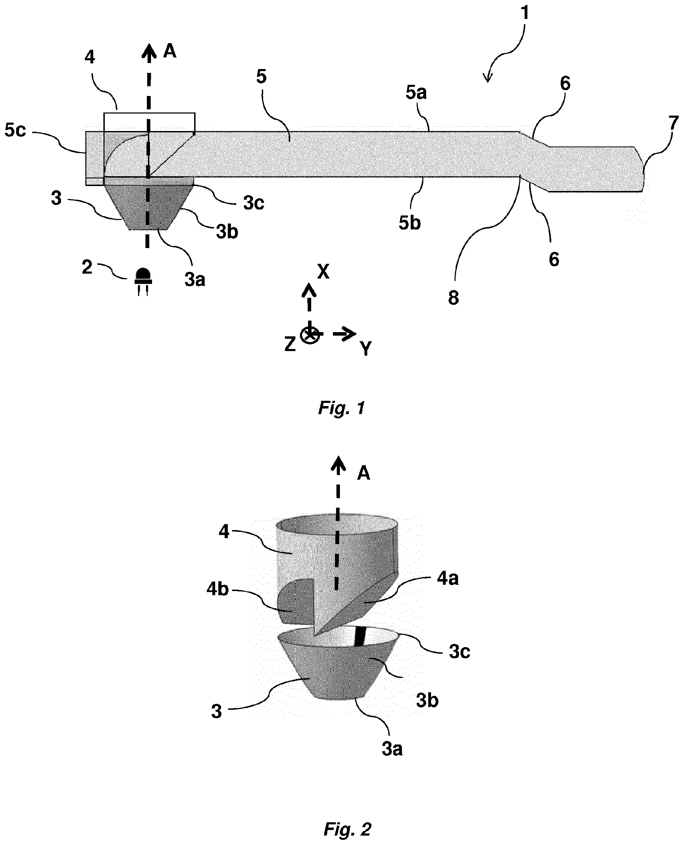

Sur la figure 1, on a représenté une vue en coupe transversale d'un module d'éclairage **1** apte à donner un faisceau lumineux à coupure pour projecteur de véhicule automobile. Pour la suite de la description, on comprendra que les surfaces du module **1** définissent un repère orthogonal XYZ dont les directions X, Y et Z correspondent respectivement à l'axe de hauteur dudit module selon X, à l'axe de longueur dudit module selon Y et à l'axe de largeur dudit module selon Z.

Selon un exemple de réalisation de l'invention, une source lumineuse **2** est disposée en-dessous du module **1.** Dans le cadre du présent texte, on comprendra les termes « au-dessus » et « en-dessous » comme des indications d'orientation quand le module **1** est disposé en position d'utilisation normale, une fois incorporé dans un projecteur lumineux monté dans un véhicule. Selon l'exemple de réalisation de l'invention, nous définirons également le plan de l'horizontale comme étant parallèle au plan de la route éclairée par ledit projecteur dans son mode de fonctionnement nominal. On comprendra qu'un module n'est pas nécessairement orienté parallèlement au plan de l'horizontale selon les directions Y et Z telles que définies respectivement par l'axe de longueur et par l'axe de largeur dudit module. Selon l'exemple de réalisation de l'invention, la source **2** est une source étendue dont les rayons lumineux ont des directions quelconques dans l'espace. De préférence, la source **2** est une diode électroluminescente, en abrégé LED. Avantageusement, la source **2** comprend plusieurs diodes électroluminescentes situées dans un même plan, et par exemple disposées sur un circuit imprimé PCB situé en-dessous du module **1.** Une disposition desdites LEDs sur un même plan PCB facilite la fabrication d'un module d'éclairage selon l'exemple de réalisation de l'invention, notamment les opérations de connexion et de soudage des différents composants.

Comme illustré sur la figure 1, le module d'éclairage **1** comprend un élément optique comportant une pluralité d'éléments. Selon un exemple de réalisation de l'invention, ledit élément optique est formé d'une seule pièce, et comprend des moyens de redirection de lumière, en particulier un collimateur **3,** un coupleur **4** et un guide de lumière **5** tous les deux situés au-dessus de la source lumineuse **2.** Avantageusement, le collimateur **3** et le coupleur **4** peuvent être en contact. Selon l'exemple de réalisation de l'invention, le collimateur **3** est situé en-dessous du guide **5.** Le collimateur **3** est un solide de révolution caractérisé par un axe de révolution **A,** ledit axe de révolution étant dirigé selon la direction X du repère XYZ. Ledit collimateur est constitué d'une ou de plusieurs surfaces réfléchissantes. En variante, ledit collimateur peut comprendre une lentille, un réflecteur, un réfracteur, ou tout autre moyen de collimation de type concave ou convexe.

Tel que représenté sur la figure 1 et sur la figure 2, le collimateur **3** comporte une face inférieure d'entrée **3a,** une ou plusieurs faces latérales de réflexion **3b,** et une face supérieure de sortie **3c.** La face inférieure **3a** du collimateur 3 est une face d'entrée de lumière apte à recevoir de la lumière émise par une source lumineuse lorsque ladite source est disposée sous ledit collimateur. Un collimateur selon l'exemple de réalisation de l'invention est typiquement configuré pour recevoir l'ensemble des rayons de faisceau lumineux émis en-dessous de la face d'entrée **3a,** en particulier l'ensemble des rayons émis par la source **2.** De préférence, la source **2** est disposée sur l'axe **A** et en-dessous du collimateur **3.** La ou les faces latérales **3c** peuvent présenter une forme cylindrique à profil parabolique, ou proche d'une parabole lorsqu'on considère une section de celles-ci dans un plan orthogonal à la direction de l'horizontale. Le collimateur **3** présente en particulier la forme d'un cône tronqué dont les bases **3a** et **3b** sont transparentes au passage de lumière, et donc la ou les faces latérales **3c** réfléchissent la lumière en réflexion totale. Les faces **3a, 3b** et **3c** du collimateur **3** sont calculées de façon à récolter de manière homogène l'intensité lumineuse émise par la source **2.** Indépendamment de leurs directions initiales, les rayons collectés sont réfléchis par une ou plusieurs faces internes dudit collimateur, celui-ci étant configuré pour rendre les rayons récoltés sensiblement parallèles entre eux à la sortie de celui-ci.

Les rayons lumineux émis par la source **2** et traversant le collimateur **3** sont réfractés par la ou les faces latérales **3c** pour être dirigés directement vers la face de sortie **3c** située en regard de la face **3a**. Ces faces sont configurées pour réfléchir les rayons suivant une direction sensiblement parallèle à l'axe X lorsque ceux-ci ressortent du collimateur **3** par la face **3c.** Ces rayons sont transmis en direction de l'entrée du coupleur **4** situé au-dessus du collimateur **3.** Le collimateur **3** est lui-même situé en-dessous du coupleur **4** et en-dessous du guide de lumière **5.**

Le guide de lumière **5** que comprend le module **1** présente une face supérieure **5a** et une face inférieure **5b** reliées entre elles par une tranche **5c.** Les faces supérieure **5a** et inférieure **5b** s'étendent dans des plans sensiblement parallèles entre eux. Le guide de lumière **5** peut cependant présenter plusieurs déformations, en particulier, un ou plusieurs décrochés. Le guide **5** est configuré pour présenter une épaisseur sensiblement constante, c'est-à-dire constante à plus ou moins 10 %, en tout point de sa longueur. On entend par épaisseur la distance séparant la face supérieure **5a** et la face inférieure **5b** dudit guide selon un plan perpendiculaire à ladite face supérieure. Les surfaces internes du guide peuvent être partiellement ou totalement revêtues d'un matériau réfléchissant. Selon un mode de réalisation de l'invention, deux décrochés **6** et une face de sortie **7** sont également présents, comme on le décrira par la suite. Ces décrochés, en particulier le décroché correspondant à la face inférieure **5b,** peuvent jouer le rôle d'une plieuse optique. Les bords de la plieuse et les matériaux constituant celle-ci permettent éventuellement à ladite plieuse de travailler en réflexion totale. Ladite plieuse est apte à dévier verticalement les rayons lumineux provenant du coupleur de façon à former une coupure. Par « plieuse optique », on comprendra ici que ledit décroché présente un bord de coupure **8** et éventuellement, mais pas nécessairement, une surface réfléchissante, pour bloquer et/ou dévier une partie du faisceau lumineux transmis dans le guide de lumière. La présence d'une surface réfléchissante, par exemple une surface réfléchissante convexe, a également l'avantage de permettre un élargissement du faisceau, et donc de créer un faisceau sortant large à coupure. Ladite coupure peut être réalisée par divers moyens comprenant, notamment, un ou plusieurs éléments occultants. Ce ou ces éléments occultants peuvent comporter un écran opaque, un cache, un miroir, ou encore une combinaison de ces éléments. La hauteur de la coupure peut, en particulier, être à la même hauteur que la surface inférieure **5b** du guide de lumière. L'homme de l'art comprendra cependant que l'on peut facilement ajuster cette hauteur de par une modification des dimensions et/ou des positions des surfaces caractérisant le guide de lumière **5.**

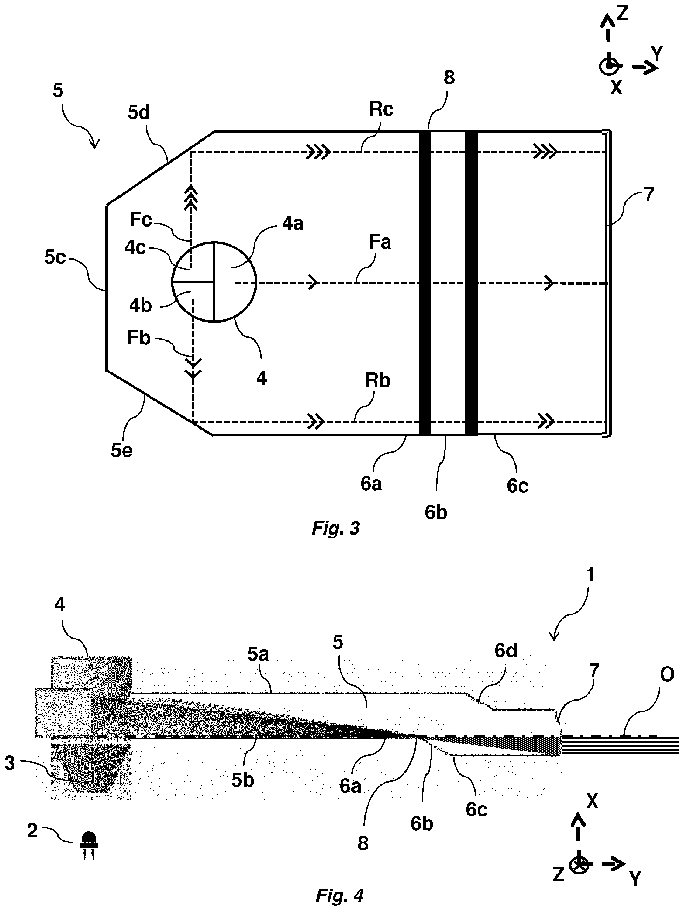

Sur la figure 3, on a représenté une section dans le plan YZ du collimateur **3** et du coupleur **4** tels que précédemment décrits. De préférence, ledit coupleur est aligné en vis-à-vis du collimateur **3** selon la direction X de sorte à ce que la totalité du faisceau lumineux transmis par ledit collimateur soit reçu par ledit coupleur. Le coupleur **4** est configuré pour dévier le faisceau sortant du collimateur **3** et diriger ledit faisceau à l'intérieur du guide de lumière **5.** Le coupleur **4** présente trois faces **4a, 4b** et **4c,** qui sont configurées pour réfléchir et séparer ledit faisceau en trois sous-faisceaux distincts. Lesdites faces sont, typiquement, des surfaces travaillant en réflexion totale. De préférence, ces sections sont chacune inclinées d'un angle de 45° par rapport à l'inclinaison définie par l'horizontale, par exemple un plan horizontal YZ. Il en résulte une redirection adéquate d'un faisceau lumineux entrant parallèle à la direction X en trois sous-faisceaux lumineux dirigés selon la direction Y. Les rayons sortant du collimateur **3** et pénétrant dans le coupleur **4** viennent frapper au moins l'une des sections constituées par l'une des faces **4a, 4b** ou **4c.** Chacune desdites faces peut présenter une section parabolique ou semi-parabolique dans des plans parallèles aux axes Y et Z. Lesdites sections paraboliques ou semi-paraboliques présentent une région focale permettant de caractériser un axe optique principal d'un faisceau transmis par le module 1, ledit axe optique étant dirigé selon la direction Y. Ces régions focales peuvent comporter en particulier un foyer situé à même distance et un sommet situé à une même hauteur.

Comme représenté sur la figure 3, un faisceau entrant dans le coupleur 4 est scindé en trois sous-faisceaux lumineux distincts **Fa, Fb** et **Fc** chacun émis à 90° l'un par rapport l'autre, dans un plan parallèle aux directions Y et Z. Les rayons du sous-faisceau **Fa** sont ainsi réfléchis par la face **4a** et ont une direction sensiblement parallèle à la direction Y. Les rayons du sous-faisceau **Fb** sont réfléchis par la face **4b** et ont une direction sensiblement antiparallèle à la direction Z. Les rayons du sous-faisceau **Fc** sont réfléchis par la face **4c** et ont une direction sensiblement parallèle à la direction Z.

Selon un exemple de réalisation de l'invention, une pluralité de faces **5c, 5d** et **5e,** notamment une pluralité de faces planes, est disposée à proximité du coupleur **4** pour rediriger l'ensemble des rayons des sous-faisceaux **Fa, Fb** et **Fc** dans le guide de lumière 5 selon une direction sensiblement parallèle à la direction Y. Les rayons du sous-faisceau **Fb** sont ainsi réfléchis par la face **4b** en un sous-faisceau **Rb** dirigé selon la direction Y. Les rayons du sous-faisceau **Fc** sont réfléchis par la face **4c** en un sous-faisceau **Rc** dirigé selon la direction Y. Les sous-faisceaux **Fa, Rb** et **Rc** sont ainsi tous dirigés parallèlement vers la plieuse **8** selon la direction Y. De préférence, les faces **5c, 5d** et **5e** constituent des surfaces latérales du guide de lumière **5.** La tranche **5c,** en particulier, est située derrière le coupleur **4** et relie la face supérieure **5a** et la face inférieure **5b** du guide de lumière **5.** Les faces **5d** et **5e** sont des faces réfléchissantes travaillant en réflexion totale et sont disposées avec un angle de 45° par rapport à la direction Y. En particulier, la face **5d** est configurée de sorte à réfléchir tout rayon incident **Fc** parallèle à la direction Z en un rayon **Rc** parallèle à la direction Y. La face **5e** est configurée de sorte à réfléchir tout rayon incident **Fb** antiparallèle à la direction Z en un rayon **Rb** parallèle à la direction Y. Chacun des rayons constituant le faisceau lumineux initial émis par la source **2** est ainsi redirigé selon la direction Y sur la plieuse **8** à l'intérieur du guide de lumière **5.**

Sur la figure 4 représentant une vue latérale du module **1,** on a illustré dans le guide de lumière **5** le tracé des rayons transmis par le coupleur **4** en direction de la plieuse **8** formant la coupure du faisceau, puis de la face de sortie **7.** La présence des deux décrochés **6b** et **6d** permet de modifier la hauteur du guide de lumière **5** sans en modifier l'épaisseur. Selon un exemple de réalisation de l'invention, les arêtes des deux décrochés **6b** et **6d** sont inclinées d'un même angle par rapport à la direction de l'horizontale. Le bord supérieur **5a** et le bord inférieur **5b** du guide **5** peuvent présenter une inclinaison d'un même angle par rapport à la direction de l'horizontale. Le bord **8** forme ainsi une plieuse apte à former une coupure du faisceau incident et transmis par les moyens précédemment décrits. Ladite coupure est réalisée suivant un plan de coupure parallèle au bord inférieur **5b** du guide **5.** Ce plan de coupure est situé à même hauteur que la plieuse, c'est-à-dire le bord de coupure **8.** Le décroché du haut, correspondant à la face **5a** dudit guide, permet de modifier la hauteur du guide **5** tout en gardant l'épaisseur de la pièce constante. L'ensemble des rayons lumineux sortants du guide de lumière 5 par la face de sortie **7** sont ainsi contraints à se propager uniquement dans une région de l'espace située au-dessous dudit plan de coupure. En variante, le décroché d'un guide de lumière peut être réalisé pour obtenir la coupure d'une partie inférieure du faisceau.

On comprendra que la position et l'angle du dièdre **6a-6b** sont calculés de façon à ce que la plieuse formée par le bord **8** bloque les rayons lumineux susceptibles de sortir du guide **5** au-dessus de la coupure, ici représentée de manière non limitative comme étant située à même hauteur que l'axe optique **O** et le bord inférieur **5b** du guide de lumière **5.** Les sections paraboliques et/ou semi-paraboliques du coupleur **4** sont travaillées de sorte à définir une région focale permettant de diriger l'ensemble des faisceaux lumineux sur le bord de la plieuse **8,** suivant dans une direction sensiblement parallèle à l'axe optique **O.** L'axe optique **O** est, par exemple, un axe horizontal dirigé selon Y, et parallèle aux faces supérieure **5a** et inférieure **5b** du guide **5.** Selon un exemple de réalisation de l'invention, l'axe optique **O** définit en particulier la direction principale du faisceau lumineux émis assurant une fonction FBL. Le faisceau à coupure est projeté dans une direction sensiblement parallèle à l'axe optique **O.** La hauteur de la ligne de coupure obtenue est ainsi sensiblement égale à la hauteur du bord inférieur **5b** du guide de lumière **5.** La face de sortie **7** permet de fermer le guide de lumière 5, par exemple à l'aide d'une glace de fermeture en matière plastique ou en verre. La face de sortie **7** permet également de réaliser une image de sortie du faisceau. Une face de sortie selon l'invention peut être, par exemple, une lentille sphérique ou cylindrique permettant d'imager le bord de la plieuse **8** et de projeter le faisceau lumineux vers l'avant du module **1,** en direction de la scène de route.

En résumé, on a représenté sur la figure 4 un exemple de réalisation selon l'invention se rapportant à un module d'éclairage **1** comprenant un élément optique, ledit élément optique comprenant un collimateur **3** situé en-dessous d'un guide de lumière **5** et un décroché **6b-6d** formant le moyen de coupure de l'élément optique. Comme illustré, la source lumineuse **2** est disposée en-dessous du collimateur **3** et émet vers le haut en direction du coupleur optique **4,** configuré pour dévier globalement les rayons du faisceau collimaté selon l'axe optique d'émission, dans le guide de lumière **5.** Pour cet exemple de réalisation, le décroché s'étend depuis une partie supérieure du guide de lumière vers une partie inférieure dudit guide, formant ainsi une marche vers le bas pour réaliser une coupure de la partie supérieure du faisceau.

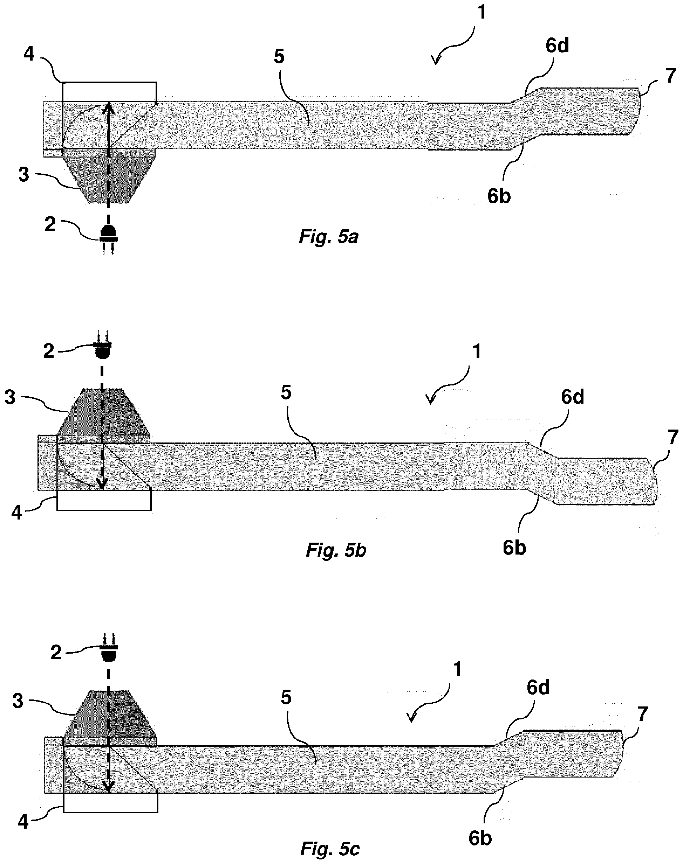

Les figures 5a, 5b et 5c représentent d'autres exemples de réalisation selon l'invention. La figure 5a est ainsi une variante d'un module d'éclairage **1** dans lequel la source lumineuse **2** est disposée en-dessous du collimateur **3** et émet vers le haut en direction du coupleur optique **4.** Le faisceau est transmis dans le guide de lumière **5,** et le faisceau à coupure est projeté par la face de sortie **7.** Pour cette variante, le décroché **6b-6d** s'étend depuis une partie inférieure du guide de lumière **5** vers une partie supérieure dudit guide, formant une marche vers le haut dans le dispositif pour réaliser une coupure de la partie inférieure du faisceau.

La figure 5b est une autre variante d'un module d'éclairage **1** dans lequel la source de lumière **2** est disposée au-dessus du collimateur **3,** ledit collimateur étant lui-même situé au-dessus du coupleur **4.** Pour cette variante, le décroché **6b-6d** s'étend depuis une partie supérieure du guide de lumière **5** vers une partie inférieure dudit guide, formant ainsi une marche vers le bas. Cette disposition et la formation d'une marche vers le bas permet de réaliser une coupure de la partie supérieure du faisceau projeté par la face de sortie **7.**

La figure 5c est une autre variante d'un module d'éclairage **1** dans lequel la source de lumière **2** est disposée au-dessus du collimateur **3,** ledit collimateur étant lui-même situé au-dessus du coupleur **4.** Pour cette variante, le décroché **6b-6d** s'étend depuis une partie inférieure du guide de lumière **5** vers une partie supérieure dudit guide, formant ainsi une marche vers le haut. Cette disposition et la réalisation d'une marche vers le haut permet de réaliser une coupure de la partie inférieure du faisceau projeté par la face de sortie **7.**

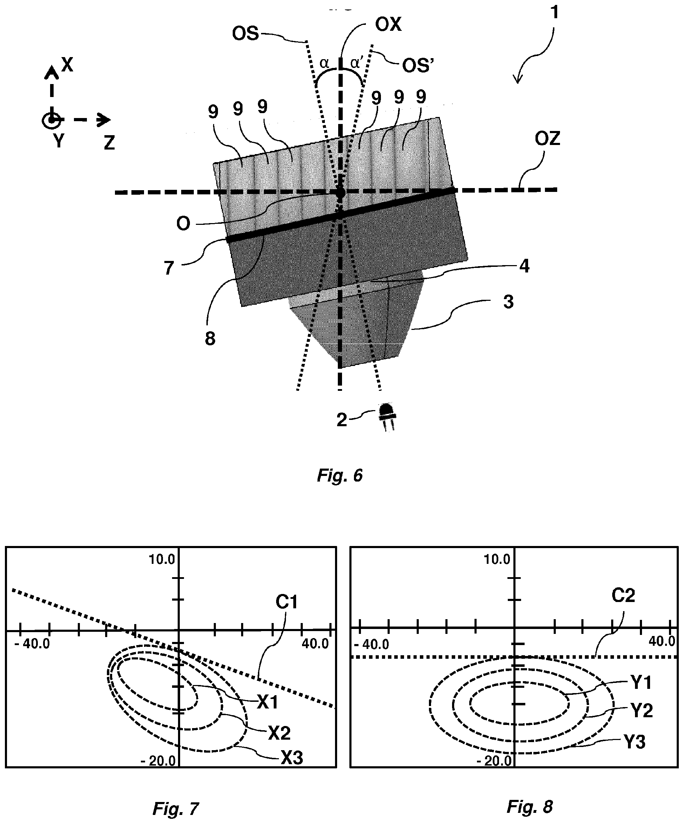

Selon un exemple de réalisation de l'invention, le module **1** peut présenter une inclinaison d'un certain angle par rapport à l'horizontale et autour de la direction Y, tout en présentant un axe optique **O** parallèle à la direction Y. Sur la figure 6, on a représenté une vue en coupe de devant dudit module **1.** La direction d'émission de la source lumineuse **2** est définie par un plan **OS,** dit plan d'émission des sources, passant par l'axe optique **O** du module. En raison de l'inclinaison du module **1,** le plan **OS** est incliné d'un angle donné **α** par rapport à la verticale, en particulier par rapport à un plan transversal **OX** orienté selon la direction **X** et passant par l'axe optique **O** du module. Ledit plan transversal **OX** est perpendiculaire à l'horizontale, en particulier par rapport à un plan horizontal **OZ.** Le plan **OS** est perpendiculaire à la direction de la plieuse **8.**

Comme décrit précédemment, la coupure du faisceau est obtenue à partir de la plieuse **8.** Lorsque le module **1** est incliné d'un certain angle par rapport à l'horizontale, en particulier par rapport au plan horizontal **OZ,** la coupure du faisceau projeté par ledit module est inclinée d'un angle **α,** dit angle d'inclinaison de la coupure.

Pour pallier cette inclinaison et redresser la coupure du faisceau, la face de sortie **7** comprend des moyens de redressement agencés pour modifier l'angle d'inclinaison de la coupure. Selon un exemple de réalisation de l'invention, lesdits moyens de redressement comportent une modulation d'épaisseur de la face de sortie. En particulier, la face de sortie **7** peut être travaillée de sorte à présenter une modulation d'épaisseur de ladite face de sortie. Avantageusement, la modulation d'épaisseur présente un angle d'inclinaison **a'** par rapport à l'horizontale dans le plan de la face de sortie **7.** En particulier, cette modulation d'épaisseur est calculée de sorte à modifier l'angle d'inclinaison de la coupure **α.** Selon un exemple de réalisation de l'invention, la modulation d'épaisseur de la face de sortie peut être formée par un bossage dans le plan de ladite face de sortie, notamment un bossage sinusoïdal ou quasi-sinusoïdal. Selon un exemple de réalisation de l'invention, ladite modulation d'épaisseur peut comprendre une pluralité d'ondulations **9,** notamment des ondulations trigonométriques. Lesdites ondulations sont réalisées de sorte à être sensiblement parallèles à un plan **OS',** dit plan de création des sections ou plan des ondulations. Selon un exemple de réalisation de l'invention, ce plan de création des sections **OS'** est incliné d'un angle **a'** par rapport au plan transversal **OX**. Selon un exemple de réalisation de l'invention, l'angle d'inclinaison **α** de de la coupure et l'angle d'inclinaison **α'** des ondulations des ondulations sont deux angles dont la somme des valeurs égale 90°, à plus ou moins 5° près. En d'autres termes, l'angle **α'** entre le plan **OS'** et le plan **OX** est avantageusement complémentaire à l'angle d'inclinaison **α** entre le plan **OS** et le plan **OX**.

Selon un exemple de réalisation de l'invention, ladite face de sortie peut être une lentille. Dans cet exemple de réalisation, ladite lentille peut présenter une face ondulée comportant des ondulations présentant une même pente verticale, ou des pentes verticales différentes par rapport à l'horizontale. Avantageusement, la face de sortie **7** est travaillée de sorte à comporter des ondulations sensiblement parallèles entre elles dans le plan de ladite face de sortie. De préférence, les ondulations **9** sont séparées entre elles par un pas constant. En variante, les ondulations **9** sont séparées entre elles par un pas évolutif. Ces ondulations prennent typiquement la forme de bosses se répartissant sur l'ensemble de la face de sortie. Ces bosses peuvent être munies de motifs, et/ou peuvent être constituées par des évidements, des reliefs, ou encore une combinaison d'évidements et de reliefs. La présence d'ondulations sur la face de sortie 7 a pour effet modifier l'inclinaison de la coupure. En particulier, ces ondulations peuvent être calculées pour réaliser un faisceau dont la coupure est redressée horizontalement. La coupure du faisceau résultant peut donc être horizontale tandis que l'inclinaison de la plieuse **8** générant ladite coupure est inclinée d'un certain angle par rapport à l'horizontale.

La forme des modulations sur la face de sortie du module peut être un bossage sinusoïdal ou quasi-sinusoïdal. La forme des modulations sur la face de sortie du module est typiquement une courbe cylindrique ou quasi-cylindrique.

Selon un exemple de réalisation de l'invention, la face de sortie 7 est continue et présente des ondulations **9.** Chaque ondulation peut être extrudée. La géométrie de la face de sortie, et la géométrie de ces ondulations extrudées, peut correspondre à différentes formes, par exemple une section de lentille cylindrique, ou encore une section de lentille sphérique.

Les figures 7 et 8 illustrent un exemple de photométrie d'un faisceau à coupure pour un module d'éclairage tel que décrit précédemment, et dont le bord de la plieuse **8** formant ladite coupure est inclinée d'un angle de 30° par rapport à l'horizontale. Le faisceau lumineux généré par ledit module peut être représenté par un ensemble de surfaces fermées, correspondant à différentes courbes isolux, par exemple **X1, X2** et **X3.** Chacune de ces courbes correspond à une courbe isolux pour un flux lumineux donné caractérisant l'éclairement du faisceau généré par le module **1.**

La figure 7 illustre le cas particulier d'un module d'éclairage dont la face de sortie ne comporte pas de modulation d'épaisseur pour modifier l'inclinaison de coupure dudit faisceau. Comme représenté sur la figure 7, les courbes **X1, X2** et **X3** sont toutes situées en-dessous d'une même ligne de coupure, ici représentée par la ligne **C1** en pointillés. On comprendra que ladite ligne de coupure **C1** est inclinée d'un même angle que le bord de la plieuse **8** par rapport à l'horizontale, ici un angle de 30°. Ladite ligne de coupure **C1** et également tangente à l'ensemble des courbes **X1, X2** et **X3.**

La figure 8 illustre le cas d'un module d'éclairage selon un exemple de réalisation de l'invention, et dont la face de sortie comporte une modulation d'épaisseur permettant de modifier l'angle d'inclinaison de la coupure dudit faisceau par rapport à l'horizontale. Ladite modulation d'épaisseur de la face de sortie **7** est calculée pour modifier l'angle d'inclinaison de la ligne de coupure **C1** par rapport à l'horizontale. Dans le cas ici décrit, cet angle d'inclinaison est égal à l'angle de 30°, présent entre le bord de la plieuse **8** et l'horizontale.

Lorsque les rayons lumineux du faisceau traversent la face de sortie **7,** la modulation d'épaisseur modifie donc l'inclinaison de la ligne de coupure **C1** de sorte à obtenir une ligne de coupure **C2** horizontale. Comme représenté sur la figure 8, les courbes isolux **X1, X2** et **X3** sont ainsi modifiées en courbes isolux **Y1, Y2** et **Y3.** Lesdites courbes sont finalement toutes situées en-dessous d'une même ligne de coupure, horizontale, ici représentée par la ligne **C2** en pointillés.

Pour cet exemple, la face de sortie est travaillée de sorte à ce que les ondulations sur ladite face de sortie présentent une pente de 60° avec l'horizontale, à plus ou moins 5° près. L'angle de cette pente est complémentaire à l'angle de 30° formé entre le bord de la plieuse **8** et l'horizontale. Ce mode de réalisation permet ainsi de redresser une ligne de coupure d'un faisceau, ladite ligne de coupure générée étant également inclinée d'un angle de 30° en raison de la disposition du bord de la plieuse. Avantageusement, on "redresse" donc un faisceau en faisant tourner l'image projetée du bord de la plieuse **8** autour d'un axe parallèle à l'horizontale. Cet axe passe par le centre du bord de la plieuse **8** et est parallèle à l'axe longitudinal du véhicule.

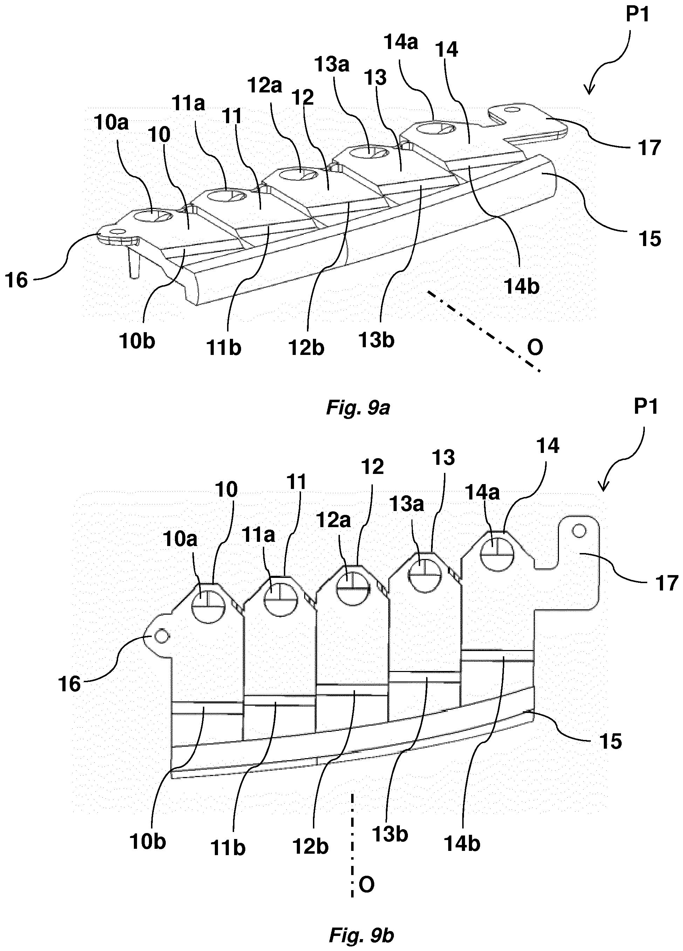

Les figures 9a et 9b illustrent un projecteur lumineux **P1** selon un premier exemple de mise en œuvre de l'invention, en perspective et en vue du dessus, respectivement. Un tel projecteur est typiquement configuré pour donner une pièce de faible épaisseur. Selon le mode de réalisation représenté, ledit projecteur **P1** est constitué de plusieurs modules d'éclairage juxtaposés l'un à côté de l'autre, de préférence cinq modules d'éclairage **10, 11, 12, 13** et **14** accolés l'un à l'autre. Lesdits modules sont configurés pour empêcher le passage de rayons parasites d'un module à l'autre. Le projecteur **P1** peut aussi être muni de points d'attaches **16** et **17,** situés de part et d'autre des extrémités dudit projecteur, pour sa fixation à l'intérieur d'un véhicule automobile.

Lesdits cinq modules sont par exemple des modules SBL (*Static Bending Light* en anglais, pour éclairage directionnel statique). Le flux sortant d'un tel dispositif est typiquement de l'ordre de 340 lm, avec une efficacité de 30%. Chacun de ces modules présente, individuellement, l'ensemble des caractéristiques techniques d'un module d'éclairage **5** tel que décrit précédemment. Le projecteur **P1** comporte également une pluralité de sources lumineuses non représentées sur les figures 9a et 9b. Lesdites sources lumineuses, de préférence cinq sources lumineuses, sont disposées sur un même plan en-dessous de chaque module d'éclairage. Lesdites sources lumineuses sont en particulier des diodes électroluminescentes de type LED. En particulier, chacun des modules d'éclairage **10, 11, 12, 13** et **14** comprend des moyens de redirection de la lumière comportant un collimateur, un coupleur, un guide de lumière et une ou plusieurs faces de réflexion réunis en une seule pièce et permettant de rediriger un faisceau lumineux suivant une direction sensiblement parallèle à un axe optique **O.**

Comme décrit précédemment, le collimateur de chacun desdits modules a pour fonction de récolter le faisceau lumineux émis par l'ensemble des sources lumineuses situées en-dessous des modules d'éclairage que comporte le projecteur **P1.** Comme décrit précédemment, le coupleur de chacun desdits modules a pour fonction de séparer ledit faisceau en trois sous-faisceaux, et de diriger lesdits sous-faisceaux dans le guide de lumière que comporte chaque module de **P1.** Chaque coupleur, typiquement, présente des sections paraboliques ou semi-paraboliques. Les foyers de ces sections se trouvent sur le bord d'un décroché du module correspondant, pour faire converger les faisceaux lumineux en ces foyers et ainsi réaliser une coupure du faisceau généré par chaque module. Ces sections sont donc configurées pour diriger lesdits sous-faisceaux sur les bords des plieuses **10b**, **11b**, **12b**, **13b** et **14b**, chacune desdites plieuses étant apte à réaliser une coupure du faisceau généré par chaque module.

Le faisceau à coupure obtenu est ensuite dirigé en direction des surfaces de sortie des modules que comporte le projecteur **P1**, et suivant une direction sensiblement parallèle à un axe optique **O** donné. Ledit axe optique **O** correspond, par exemple, à l'axe optique de l'un des modules, par exemple le module central **12.** L'angle d'ouverture permis par la face de sortie de chacun desdits modules permet typiquement de générer un faisceau de 15° à 20° de largeur. La juxtaposition de cinq desdits modules permet, typiquement de générer un faisceau global résultant présentant une ouverture comprise entre 20° et 80°.

Selon un exemple de réalisation de l'invention, le projecteur **P1** présente une face de sortie constituée d'une seule pièce commune à l'ensemble des cinq modules d'éclairage **10, 11, 12, 13** et **14.** En particulier, et comme représenté, les faces de sortie de chacun desdits modules sont réunies en une seule surface lisse continue **15**, par exemple une glace commune à l'ensemble des modules. En variante, ladite surface peut être perlée et/ou grainée au lieu d'être lisse. Ladite surface **15** peut présenter des ondulations aptes à redresser la ligne de coupure du faisceau généré par chaque module.

Toujours selon cet exemple de réalisation de l'invention, les bords des plieuses **10b, 11b, 12b, 13b** et **14b** de chacun des modules d'éclairage juxtaposés ne sont pas nécessairement alignées sur une même ligne. On comprendra qu'un petit décalage vertical peut être permis entre deux modules accolés l'un à l'autre. Avantageusement, les ondulations sur la face de sortie **15** sont configurées de façon à ce qu'un projecteur constitué de plusieurs desdits modules génère un faisceau résultant dont la plan de coupure est parallèle à l'horizontale. La coupure apparaît ainsi comme une ligne horizontale sur la route. De plus, chacun desdits modules peut être incliné par rapport à l'horizontale avec un certain angle, par exemple 45°. Les bords des plieuses **10b, 11b, 12b, 13b** et **14b** réalisant la coupure du faisceau généré par chacun de ces modules inclinés seront donc également inclinés avec un angle égal. La juxtaposition de plusieurs modules, notamment cinq modules, est cependant réalisée de sorte à permettre au projecteur **P1** de générer un faisceau lumineux présentant un même plan de coupure.

Les figures 9a et 9b illustrent un projecteur lumineux **P1** selon un premier exemple de mise en œuvre de l'invention, en perspective et en vue du dessus, respectivement. Un tel projecteur est typiquement configuré pour donner une pièce de faible épaisseur. Selon le mode de réalisation représenté, ledit projecteur **P1** est constitué de plusieurs modules d'éclairage juxtaposés l'un à côté de l'autre, de préférence cinq modules d'éclairage **10, 11, 12, 13** et **14** accolés l'un à l'autre. Lesdits modules sont configurés pour empêcher le passage de rayons parasites d'un module à l'autre. Le projecteur **P1** peut aussi être muni de points d'attaches **16** et **17,** situés de part et d'autre des extrémités dudit projecteur, pour sa fixation à l'intérieur d'un véhicule automobile.

Lesdits cinq modules sont par exemple des modules SBL (*Static Bending Light* en anglais, pour éclairage directionnel statique). Le flux sortant d'un tel dispositif est typiquement de l'ordre de 340 lm, avec une efficacité de 30%. Chacun de ces modules présente, individuellement, l'ensemble des caractéristiques techniques d'un module d'éclairage **5** tel que décrit précédemment. Le projecteur **P1** comporte également une pluralité de sources lumineuses non représentées sur les figures 9a et 9b. Lesdites sources lumineuses, de préférence cinq sources lumineuses, sont disposées sur un même plan en-dessous de chaque module d'éclairage. Lesdites sources lumineuses sont en particulier des diodes électroluminescentes de type LED. En particulier, chacun des modules d'éclairage **10, 11, 12, 13** et **14** comprend des moyens de redirection de la lumière comportant un collimateur, un coupleur, un guide de lumière et une ou plusieurs faces de réflexion réunis en une seule pièce et permettant de rediriger un faisceau lumineux suivant une direction sensiblement parallèle à un axe optique **O.**

Comme décrit précédemment, le collimateur de chacun desdits modules a pour fonction de récolter le faisceau lumineux émis par l'ensemble des sources lumineuses situées en-dessous des modules d'éclairage que comporte le projecteur **P1**. Comme décrit précédemment, le coupleur de chacun desdits modules a pour fonction de séparer ledit faisceau en trois sous-faisceaux, et de diriger lesdits sous-faisceaux dans le guide de lumière que comporte chaque module de **P1**. Chaque coupleur, typiquement, présente des sections paraboliques ou semi-paraboliques. Les foyers de ces sections se trouvent sur le bord d'un décroché du module correspondant, pour faire converger les faisceaux lumineux en ces foyers et ainsi réaliser une coupure du faisceau généré par chaque module. Ces sections sont donc configurées pour diriger lesdits sous-faisceaux sur les bords des plieuses **10b, 11b, 12b, 13b** et **14b,** chacune desdites plieuses étant apte à réaliser une coupure du faisceau généré par chaque module.

Le faisceau à coupure obtenu est ensuite dirigé en direction des surfaces de sortie des modules que comporte le projecteur **P1,** et suivant une direction sensiblement parallèle à un axe optique **O** donné. Ledit axe optique **O** correspond, par exemple, à l'axe optique de l'un des modules, par exemple le module central **12.** L'angle d'ouverture permis par la face de sortie de chacun desdits modules permet typiquement de générer un faisceau de 15° à 20° de largeur. La juxtaposition de cinq desdits modules permet, typiquement de générer un faisceau global résultant présentant une ouverture comprise entre 20° et 80°.

Selon un exemple de réalisation de l'invention, le projecteur **P1** présente une face de sortie constituée d'une seule pièce commune à l'ensemble des cinq modules d'éclairage **10, 11, 12, 13** et **14.** En particulier, et comme représenté, les faces de sortie de chacun desdits modules sont réunies en une seule surface lisse continue **15,** par exemple une glace commune à l'ensemble des modules. En variante, ladite surface peut être perlée et/ou grainée au lieu d'être lisse. Ladite surface **15** peut présenter des ondulations aptes à redresser la ligne de coupure du faisceau généré par chaque module.

Toujours selon cet exemple de réalisation de l'invention, les bords des plieuses **10b, 11b, 12b, 13b** et **14b** de chacun des modules d'éclairage juxtaposés ne sont pas nécessairement alignées sur une même ligne. On comprendra qu'un petit décalage vertical peut être permis entre deux modules accolés l'un à l'autre. Avantageusement, les ondulations sur la face de sortie **15** sont configurées de façon à ce qu'un projecteur constitué de plusieurs desdits modules génère un faisceau résultant dont la plan de coupure est parallèle à l'horizontale. La coupure apparaît ainsi comme une ligne horizontale sur la route. De plus, chacun desdits modules peut être incliné par rapport à l'horizontale avec un certain angle, par exemple 45°. Les bords des plieuses **10b, 11b, 12b, 13b** et **14b** réalisant la coupure du faisceau généré par chacun de ces modules inclinés seront donc également inclinés avec un angle égal. La juxtaposition de plusieurs modules, notamment cinq modules, est cependant réalisée de sorte à permettre au projecteur **P1** de générer un faisceau lumineux présentant un même plan de coupure.

Les figures 9a et 9b illustrent un projecteur lumineux selon un deuxième exemple de mise en œuvre de l'invention, en perspective et en vue du dessus, respectivement. Un projecteur lumineux **P1** est constitué de plusieurs modules d'éclairage juxtaposés l'un à côté de l'autre, de préférence cinq modules d'éclairage **10, 11, 12, 13** et **14** accolés l'un à l'autre.

Similairement à l'exemple de réalisation précédent, chacun desdits modules comprend un collimateur, un coupleur, un guide de lumière et une ou plusieurs faces de réflexion réunis en une seule pièce. Suivant ce mode de réalisation, les décrochés **10b, 11b, 12b, 13b** et **14b** associés aux différents modules d'éclairage juxtaposés sont sensiblement alignés les uns par rapport aux autres. De préférence, les modules du projecteur ne sont pas décrochés et sont tous situés à une hauteur sensiblement identique. Cette configuration permet de réaliser un projecteur de faible épaisseur donnant un faisceau à coupure.

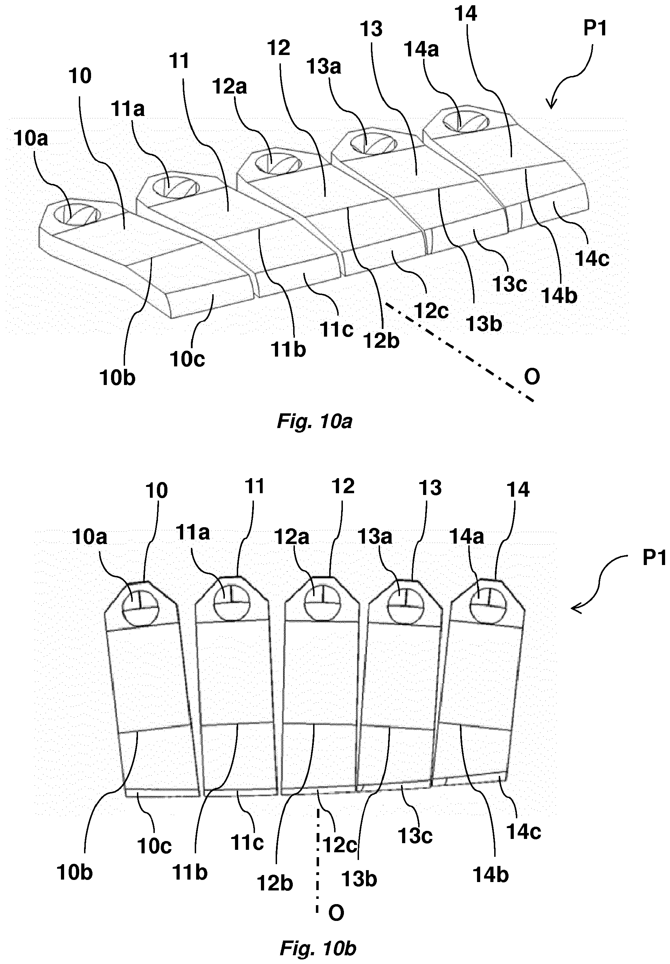

Une pluralité de sources lumineuses, par exemple cinq LEDs, est disposée sur un plan en-dessous desdits modules d'éclairage. Ces LEDs ne sont pas représentées sur les figures 10a et 10b. Chacun desdits collimateurs est configuré pour récolter la plus grande partie possible de l'intensité lumineuse émise par chacune desdites LEDs. Le faisceau est ensuite transmis aux coupleurs **10a, 11a, 12a, 13a** et **14a** situés au-dessus de chaque collimateur, pour être ensuite dirigé sur le bord des plieuses **10b, 11b, 12b, 13b** et **14b** dans le module d'éclairage correspondant. Les rayons sont ensuite dirigés en direction d'une ou de plusieurs surfaces de sortie, suivant une direction sensiblement parallèle à un axe optique **O** donné. Selon le présent exemple de réalisation de l'invention, la ou les surfaces de sortie sont configurées pour contrecarrer l'inclinaison des modules et/ou des lignes de coupure générées par chacun des modules.

Comme précédemment, le bord desdites arêtes correspond aux régions focales des sections paraboliques caractérisant lesdits coupleurs. Les arêtes permettent alors de réaliser une coupure de chaque faisceau transmis en bloquant les rayons situés au-dessus de celle-ci. Le projecteur **P1** présente une face de sortie constituée de plusieurs pièces **10c, 11c, 12c, 13c** et **14c.** Ces pièces peuvent éventuellement comporter une seule face de sortie commune à l'ensemble des cinq modules d'éclairage **10, 11, 12, 13** et **14.** Ces faces de sorties peuvent être constituées d'une ou de plusieurs surfaces lisses, afin d'imager les arêtes **10b, 11b, 12b, 13b** et **14b.** Lesdites faces de sortie peuvent également être modifiées de telle sorte à focaliser la lumière sur une arête travaillant en réflexion totale. Ainsi, l'image de sortie du module sera un faisceau à coupure.

Ces caractéristiques permettent de réaliser un projecteur lumineux constitué d'une seule pièce. Selon un exemple de réalisation de l'invention, un projecteur présentant ces caractéristiques est apte à réaliser une fonction d'éclairage à coupure sur une hauteur de sortie très fine, avantageusement inférieure à 10mm. Par « hauteur de sortie avantageusement inférieur à 10 mm », on comprendra ici que la distance séparant le rayon distal dudit faisceau à coupure et l'axe optique **O** dudit faisceau est avantageusement inférieure ou égale à 10mm.

Indépendamment des dimensions des dispositifs correspondants, un projecteur lumineux suivant le premier mode de réalisation décrit et/ou un projecteur lumineux suivant le deuxième mode de réalisation décrit peut en particulier être configuré pour réaliser une fonction FBL et/ou de virage, avec un flux lumineux inférieur ou égal à 200 lumens.

Ce type de dispositif optique présente l'avantage d'être constitué d'une seule pièce pour réaliser l'imagerie désirée, tout en présentant une épaisseur constante. La faible épaisseur de la pièce permet également de fabriquer ce type de projecteur lumineux par injection sur une presse classique. Ce mode de fabrication ne nécessite pas l'utilisation de moules multi-couches, réduisant également son coût de production. Finalement, ce type de dispositif présente un encombrement réduit, facilitant son incorporation dans un véhicule.

Naturellement, pour satisfaire des besoins spécifiques, une personne compétente dans le domaine de l'invention pourra appliquer des modifications dans la description précédente.

Bien que la présente invention ait été décrite ci-dessus en référence à des modes de réalisation spécifiques, la présente invention n'est pas limitée aux modes de réalisation spécifiques, et les modifications qui se trouvent dans le champ d'application de la présente invention seront évidentes pour une personne versée dans l'art.

## Revendications

1. Module d'éclairage (1) pour projecteur de véhicule automobile, apte à émettre un faisceau lumineux à coupure selon un axe optique (O) prédéterminé, ledit module d'éclairage comprenant :
- une source lumineuse (2) pour générer un faisceau,
- un élément optique pour recevoir le faisceau généré par la source lumineuse et configuré pour former à partir de ce faisceau ledit faisceau lumineux à coupure,
ledit élément optique comprenant :
- un collimateur (3) configuré pour recevoir le faisceau généré par la source lumineuse et pour collimater ce faisceau en un faisceau collimaté,
- un coupleur optique (4) configuré pour coupler le faisceau collimaté en un faisceau couplé dans un guide de lumière (5),
- un moyen de coupure (6) disposé au sein dudit guide de lumière sur le chemin des rayons du faisceau couplé et configuré pour intercepter une partie desdits rayons dans le guide de lumière et former un faisceau à coupure, et
- au moins une face de sortie (7) dudit guide de lumière configurée pour projeter ledit faisceau à coupure hors de l'élément optique,
l'élément optique étant formé en une seule pièce, **caractérisé en ce que** ledit coupleur optique (4) comprend une pluralité de faces réfléchissantes (4a, 4b, 4c), chacune desdites faces réfléchissantes présentant une section parabolique.

2. Module d'éclairage (1) selon la revendication 1, **caractérisé en ce que** ledit guide de lumière (5) présente une épaisseur sensiblement constante.

3. Module d'éclairage (1) selon l'une quelconque des revendications précédentes, **caractérisé en ce que** ledit moyen de coupure (6) forme un décroché (6) dans le guide de lumière (5), ledit décroché formant un angle avec une partie horizontale et avec une partie inclinée.

4. Module d'éclairage (1) selon l'une quelconque des revendications précédentes, **caractérisé en ce que** ledit collimateur (3) est un solide de révolution présentant un axe de révolution (A) et comprend une ou plusieurs surfaces réfléchissantes.

5. Module d'éclairage (1) selon l'une quelconque des revendications précédentes, **caractérisé en ce que** ledit collimateur (3) comprend une lentille, un réflecteur, un réfracteur, ou un moyen de collimation de type concave ou convexe.

6. Module d'éclairage (1) selon l'une quelconque des revendications précédentes, **caractérisé en ce que** ledit coupleur optique (4) est configuré pour scinder le faisceau collimaté en trois sous-faisceaux lumineux (Fa, Fb, Fc) distincts chacun émis à 90° l'un par rapport l'autre.

7. Module d'éclairage selon l'une quelconque des revendications précédentes, **caractérisé en ce que** ladite source lumineuse (2) comprend une pluralité de diodes électroluminescentes disposées sur un même plan, ledit plan étant disposé sous ledit collimateur (3) et/ou sous le moyen de coupure (6) par rapport audit axe optique (O).

8. Module d'éclairage (1) selon l'une quelconque des revendications précédentes, **caractérisé en ce que** ledit guide de lumière (5) présente une face supérieure (5a) et une face inférieure (5b) reliées entre elles par une tranche (5c), ladite face supérieure et ladite face inférieure s'étendant dans des plans sensiblement parallèles entre eux.

9. Module d'éclairage (1) selon l'une quelconque des revendications précédentes, **caractérisé en ce que** ledit guide de lumière (5) comprend au moins une face réfléchissante (5c, 5d, 5e) configurée pour recevoir une partie des rayons du faisceau couplé par le coupleur optique (4) et pour réfléchir et focaliser ces rayons sur le moyen de coupure (6).

10. Module d'éclairage (1) selon l'une quelconque des revendications précédentes, **caractérisé en ce que** la distance séparant le rayon distal dudit faisceau à coupure et ledit axe optique (O) est inférieure ou égale à 10mm.

11. Projecteur lumineux (P1) comprenant plusieurs modules d'éclairage (10, 11, 12, 13, 14) selon l'une quelconque des revendications précédentes, **caractérisé en ce que** plusieurs desdits modules sont juxtaposés, de préférence cinq desdits modules, pour générer un faisceau, dit faisceau résultant, suivant la direction d'un axe optique (O) de l'un desdits modules.

12. Projecteur lumineux selon la revendication précédente, **caractérisé en ce que** les faces de sortie (7) de chacun desdits modules (10, 11, 12, 13, 14) sont réunies en une seule surface (15) lisse continue, notamment une glace commune auxdits plusieurs modules.

13. Projecteur lumineux selon la revendication 11 ou 12, **caractérisé en ce que** lesdits (10, 11, 12, 13, 14) modules sont configurés pour réaliser une fonction d'éclairage directionnel fixe et/ou de virage avec un flux lumineux supérieur ou égal à 200 lumens.

## Patentansprüche

1. Beleuchtungsmodul (1) für einen Scheinwerfer eines Kraftfahrzeugs, das dazu fähig ist, ein Lichtbündel mit Abschattung gemäß einer vorgegebenen optischen Achse (O) zu emittieren, wobei das Beleuchtungsmodul Folgendes beinhaltet:
- eine Lichtquelle (2), um ein Bündel zu erzeugen,
- ein optisches Element, um das von der Lichtquelle erzeugte Bündel zu empfangen und das dazu konfiguriert ist, aus diesem Bündel das Lichtbündel mit Abschattung zu bilden,
wobei das optische Element Folgendes beinhaltet:
- einen Kollimator (3), der dazu konfiguriert ist, das von der Lichtquelle erzeugte Bündel zu empfangen und dieses Bündel zu einem kollimierten Bündel zu kollimieren,
- einen optischen Koppler (4), der dazu konfiguriert ist, das zu einem gekoppelten Bündel kollimierte Bündel in einen Lichtleiter (5) einzukoppeln,
- ein Abschattungsmittel (6), das innerhalb des Lichtleiters auf dem Weg der Strahlen des gekoppelten Bündels angeordnet ist und dazu konfiguriert ist, einen Teil der Strahlen in dem Lichtleiter abzufangen und ein Bündel mit Abschattung zu bilden, und
- mindestens eine Austrittsfläche (7) des Lichtleiters, die dazu konfiguriert ist, das Bündel mit Abschattung aus dem optischen Element heraus zu projizieren,
wobei das optische Element einstückig gebildet ist, **dadurch gekennzeichnet, dass** der optische Koppler (4) eine Vielzahl von reflektierenden Flächen (4a, 4b, 4c) beinhaltet, wobei jede der reflektierenden Flächen einen Parabolquerschnitt aufweist.

2. Beleuchtungsmodul (1) nach Anspruch 1, **dadurch gekennzeichnet, dass** der Lichtleiter (5) eine im Wesentlichen konstante Dicke aufweist.

3. Beleuchtungsmodul (1) nach einem der vorhergehenden Ansprüche, **dadurch gekennzeichnet, dass** das Abschattungsmittel (6) eine Abschrägung (6) in dem Lichtleiter (5) bildet, wobei die Abschrägung einen Winkel mit einem horizontalen Teil und mit einem geneigten Teil bildet.

4. Beleuchtungsmodul (1) nach einem der vorhergehenden Ansprüche, **dadurch gekennzeichnet, dass** der Kollimator (3) ein Rotationskörper mit einer Rotationsachse (A) ist und eine oder mehrere reflektierende Oberflächen aufweist.

5. Beleuchtungsmodul (1) nach einem der vorhergehenden Ansprüche, **dadurch gekennzeichnet, dass** der Kollimator (3) eine Linse, einen Reflektor, einen Refraktor oder ein Kollimationsmittel konkaven oder konvexen Typs beinhaltet.

6. Beleuchtungsmodul (1) nach einem der vorhergehenden Ansprüche, **dadurch gekennzeichnet, dass** der optische Koppler (4) dazu konfiguriert ist, das kollimierte Bündel in drei unterschiedliche untergeordnete Lichtbündel (Fa, Fb, Fc) aufzuteilen, die jeweils um 90° zueinander versetzt emittiert werden.

7. Beleuchtungsmodul nach einem der vorhergehenden Ansprüche, **dadurch gekennzeichnet, dass** die Lichtquelle (2) eine Vielzahl von Elektrolumineszenzdioden beinhaltet, die in einer gemeinsamen Ebene angeordnet sind, wobei die Ebene mit Bezug auf die optische Achse (O) unterhalb des Kollimators (3) und/oder unterhalb des Abschattungsmittels (6) angeordnet ist.

8. Beleuchtungsmodul (1) nach einem der vorhergehenden Ansprüche, **dadurch gekennzeichnet, dass** der Lichtleiter (5) eine obere Fläche (5a) und eine untere Fläche (5b) aufweist, die durch einen Abschnitt (5c) miteinander verbunden sind, wobei sich die obere Fläche und die untere Fläche in Ebenen erstrecken, die zueinander im Wesentlichen parallel sind.

9. Beleuchtungsmodul (1) nach einem der vorhergehenden Ansprüche, **dadurch gekennzeichnet, dass** der Lichtleiter (5) mindestens eine reflektierende Fläche (5c, 5d, 5e) beinhaltet, die dazu konfiguriert ist, einen Teil der Strahlen des durch den optischen Koppler (4) gekoppelten Bündels zu empfangen und diese Strahlen zu dem Abschattungsmittel (6) zu reflektieren und zu fokussieren.

10. Beleuchtungsmodul (1) nach einem der vorhergehenden Ansprüche, **dadurch gekennzeichnet, dass** der Abstand, der den distalen Strahl des Bündels mit Abschattung von der optischen Achse (O) trennt, kleiner als oder gleich 10 mm ist.

11. Lichtscheinwerfer (P1), der mehrere Beleuchtungsmodule (10, 11, 12, 13, 14) nach einem der vorhergehenden Ansprüche beinhaltet, **dadurch gekennzeichnet, dass** mehrere der Module, vorzugsweise fünf Module, nebeneinander liegen, um ein Bündel, das als resultierendes Bündel bezeichnet wird, gemäß der Richtung einer optischen Achse (O) eines der Module zu erzeugen.

12. Lichtscheinwerfer nach dem vorhergehenden Anspruch, **dadurch gekennzeichnet, dass** die Austrittsflächen (7) jedes der Module (10, 11, 12, 13, 14) in einer einzigen glatten durchgehenden Oberfläche (15), insbesondere einer Scheibe, die den mehreren Modulen gemein ist, vereint sind.

13. Lichtscheinwerfer nach Anspruch 11 oder 12, **dadurch gekennzeichnet, dass** die Module (10, 11, 12, 13, 14) dazu konfiguriert sind, eine feste und/oder für das Abbiegen bestimmte Kurvenbeleuchtungsfunktion mit einer Lichtleistung größer als oder gleich 200 Lumen auszuführen.

## Claims

1. Lighting module (1) for an automobile headlamp, able to emit a cut-off light beam along a predetermined optical axis (O), said lighting module comprising:
- a light source (2) for generating a beam,
- an optical element for receiving the beam generated by the light source and configured to form from this beam said cut-off light beam,
said optical element comprising:
- a collimator (3) configured to receive the beam generated by the light source and to collimate this beam into a collimated beam,
- an optical coupler (4) configured to couple the collimated beam into a coupled beam in a lightguide (5),
- a cut-off means (6) disposed within said lightguide on the path of the rays of the coupled beam and configured to intercept a portion of said rays in the lightguide and to form a cut-off beam, and
- at least one output face (7) of said lightguide configured to project said cut-off beam outside of the optical element,
the optical element being formed as a single part
**characterized in that** said optical coupler (4) comprises a plurality of reflective faces (4a, 4b, 4c), each of said reflective faces in particular having a section in the shape of a parabolic segment.

2. Lighting module (1) according to Claim 1, **characterized in that** said lightguide (5) has a substantially constant thickness.

3. Lighting module (1) according to any one of the preceding claims, **characterized in that** said cut-off means (6) forms a step (6) in the lightguide (5), said step forming an angle with a horizontal portion and with an inclined portion.

4. Lighting module (1) according to any one of the preceding claims, **characterized in that** said collimator (3) is a solid of revolution having an axis of revolution (A) and comprises one or more reflective surfaces.

5. Lighting module (1) according to any one of the preceding claims, **characterized in that** said collimator (3) comprises a lens, a reflector, a refractor, or a collimation means of the convex or convex type.

6. Lighting module (1) according to any one of the preceding claims, **characterized in that** said optical coupler (4) is configured to split the collimated beam into three separate sub-light-beams (Fa, Fb, Fc), each emitted at 90° with respect to each other.

7. Lighting module according to any one of the preceding claims, **characterized in that** said light source (2) comprises a plurality of light-emitting diodes disposed on the same plane, said plane being disposed under said collimator (3) and/or under the cut-off means (6) with respect to said optical axis (O).

8. Lighting module (1) according to any one of the preceding claims, **characterized in that** said lightguide (5) has an upper face (5a) and a lower face (5b) joined together by an edge face (5c), said upper face and said lower face extending in planes which are substantially parallel to one another.

9. Lighting module (1) according to any one of the preceding claims, **characterized in that** said lightguide (5) comprises at least one reflective face (5c, 5d, 5e) configured to receive a portion of the rays of the beam coupled by the optical coupler (4) and for reflecting and focusing these rays onto the cut-off means (6).

10. Lighting module (1) according to any one of the preceding claims, **characterized in that** the distance separating the distal ray of said cut-off beam and said optical axis (O) is equal to or less than 10 mm.

11. Headlamp (P1) comprising several lighting modules (10, 11, 12, 13, 14) according to any one of the preceding claims, **characterized in that** several of said modules are juxtaposed, preferably five of said modules, in order to generate a beam, said resulting beam following the direction of an optical axis (O) of one of said modules.

12. Headlamp according to the preceding claim, **characterized in that** the output faces (7) of each of said modules (10, 11, 12, 13, 14) are combined into a single smooth, continuous surface (15), especially an outer lens common to said several modules.

13. Headlamp according to Claim 11 or 12, **characterized in that** said modules (10, 11, 12, 13, 14) are configured to produce a fixed bending light function and/or a cornering function with a light flux equal to or greater than 200 lumens.
